(19) Europäisches Patentamt
European Patent Office
Office européen des brevets

(11) **EP 4 686 393 A1**

(12) **EUROPÄISCHE PATENTANMELDUNG**

(43) Veröffentlichungstag:
04.02.2026 Patentblatt 2026/06

(21) Anmeldenummer: 25183682.1

(22) Anmeldetag: **18.06.2025**

(51) Internationale Patentklassifikation (IPC):
**A01D 41/127** $^{(2006.01)}$

(52) Gemeinsame Patentklassifikation (CPC):
**A01D 41/127**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **31.07.2024 DE 102024121759**

(71) Anmelder: **CLAAS Selbstfahrende
Erntemaschinen GmbH
33428 Harsewinkel (DE)**

(72) Erfinder:
• **Wilken, Andreas
49143 Bissendorf (DE)**

• **Vöcking, Henner
33397 Rietberg (DE)**
• **Bormann, Bastian
33334 Gütersloh (DE)**
• **Domnik, Matthias
59302 Oelde (DE)**
• **Thiesmann, Waldemar
49080 Osnabrück (DE)**
• **Kösters, Tarek
50735 Köln (DE)**

(74) Vertreter: **CLAAS Gruppe
Mühlenwinkel 1
33428 Harsewinkel (DE)**

(54) **MÄHDRESCHER**

(57) Die vorliegende Erfindung betrifft einen Mähdrescher mit mehreren Arbeitsorganen (16) und einem Fahrerassistenzsystem (18) zur Ansteuerung der Arbeitsorgane, wobei das Fahrerassistenzsystem (18) einen Speicher (26) zum Hinterlegen von Daten und eine Rechenvorrichtung (27) zur Verarbeitung der in dem Speicher (26) hinterlegten Daten umfasst, wobei die Arbeitsorgane zusammen mit dem Fahrerassistenzsystem (18) einen Einstellautomaten (20) bilden, indem im Speicher (26) eine Mehrzahl auswählbarer Ernteprozeßstrategien (26a) hinterlegt sind und indem die Rechenvorrichtung (27) dazu eingerichtet ist, zur Umsetzung der jeweils ausgewählten Ernteprozeßstrategie (26a) mindestens einen Einstellparameter autonom zu ermitteln und den Arbeitsorganen gesamtheitlich vorzugeben, wobei im Speicher (26) ein Gesamtmodell (M1, M2) pro Zielgröße hinterlegt ist, wobei das Gesamtmodell (M1, M2) funktionale Zusammenhänge zwischen der Zielgröße und mehreren Einflussgrößen bildet, wobei die Einflussgrößen innere Einflussgrößen und äußere Einflussgrößen umfassen, und wobei die Rechenvorrichtung (27) dazu eingerichtet ist, die autonome Ermittlung des mindestens einen Einstellparameters basierend auf dem Gesamtmodell (M1, M2) vorzunehmen.

Fig. 3

EP 4 686 393 A1

# EP 4 686 393 A1

**Beschreibung**

Die vorliegende Erfindung betrifft einen Mähdrescher gemäß dem Oberbegriff des Anspruches 1.

Mähdrescher können bei der Mahd und dem Drusch von Körnerfrüchten als Erntegut zum Einsatz kommen. Hierzu kann der Mähdrescher mehrere Arbeitsorgane zur Durchführung spezifischer Teilbearbeitungsprozesse eines Gesamtbearbeitungsprozess zur Verarbeitung von Erntegut umfassen. Dabei kann der Drusch beispielsweise durch eine Dreschvorrichtung erfolgen, welche aus dem von dem Mähdrescher durch ein Vorsatzgerät, insbesondere ein Schneidwerk, aufgenommenen Erntegut Korngut gewinnen kann. Das Korngut kann nach dem Dreschen einer Abscheidung durch eine Abscheidevorrichtung und einer anschließenden Reinigung durch eine Reinigungsvorrichtung einem Korntank zugeführt werden. Als weitere Bestandteile des Ernteguts können z. B. die Spreu und das Stroh übrigbleiben, welche entweder gemeinsam mit dem von einer Häckselvorrichtung zerkleinerten Stroh über das Feld verteilt oder - im Falle des Strohs - auf Schwad z.B. zur späteren Aufnahme durch eine Ballenpresse gelegt werden können. Das Einstellen der verschiedenen Arbeitsorgane kann an eine Bedienperson hohe Anforderungen stellen, da Änderungen eines Einstellparameters sich bereits innerhalb eines Arbeitsorgans auf andere Einstellparameter bzw. Prozessqualitätsparameter auswirken. So kann beispielsweise die Anhebung der Drehzahl einer Dreschtrommel der Dreschvorrichtung zu einer Erhöhung des Durchsatzes an Erntegut, zugleich erhöht sich aber auch der Anteil an Bruchkorn führen.

Aus der EP 3 566 563 A1 ist ein Mähdrescher gemäß dem Oberbegriff des Anspruches 1 bekannt. Der aus der EP 3 566 563 A1 bekannte Mähdrescher weist ein Fahrerassistenzsystem zur Ansteuerung der Arbeitsorgane auf, welches einen Speicher zum Hinterlegen von Daten, eine Rechenvorrichtung zur Verarbeitung der im Speicher hinterlegten Daten, sowie eine grafische Benutzerschnittstelle umfasst. Zur Ansteuerung einer Abscheidevorrichtung und einer Reinigungsvorrichtung ist jeweils ein Einstellautomat vorgesehen. Ferner ist vorgesehen, dass zu einer Ansteuerung einzelner Einstellautomaten und eines Datenaustausches der Einstellautomaten untereinander dem Fahrerassistenzsystem ein Prozesssupervisor zugeordnet ist. Dem Prozesssupervisor kommt die Aufgabe zu, den Gesamtbearbeitungsprozess zu optimieren, indem dieser gezielt Einfluss auf die Einstellautomaten nimmt. Ein derartiger Mähdrescher mit einem Prozesssupervisor kann jedoch einen komplexen Aufbau haben. Verbesserungen für diese Situation sind demnach wünschenswert.

Eine Aufgabe dieser Erfindung liegt darin, einen Mähdrescher mit Fahrerassistenzsystem mit einer effizienten Gesamtmaschinenregelung weiterzubilden und zu verbessern.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein erster Aspekt bezieht sich auf einen Mähdrescher mit mehreren Arbeitsorganen und einem Fahrerassistenzsystem zur Ansteuerung der Arbeitsorgane. Dabei umfasst das Fahrerassistenzsystem einen Speicher zum Hinterlegen von Daten und eine Rechenvorrichtung zur Verarbeitung der in dem Speicher hinterlegten Daten. Die Arbeitsorgane bilden zusammen mit dem Fahrerassistenzsystem einen Einstellautomaten, indem im Speicher eine Mehrzahl auswählbarer Ernteprozeßstrategien hinterlegt sind und indem die Rechenvorrichtung dazu eingerichtet ist, zur Umsetzung der jeweils ausgewählten Ernteprozeßstrategie mindestens einen Einstellparameter autonom zu ermitteln und den Arbeitsorganen gesamtheitlich vorzugeben. Im Speicher ist ein Gesamtmodell pro Zielgröße hinterlegt, wobei das Gesamtmodell funktionale Zusammenhänge zwischen der Zielgröße und mehreren Einflussgrößen bildet. Die Einflussgrößen umfassen innere Einflussgrößen und äußere Einflussgrößen. Die Rechenvorrichtung ist dazu eingerichtet, die autonome Ermittlung des mindestens einen Einstellparameters basierend auf dem Gesamtmodell vorzunehmen.

Das Fahrerassistenzsystem kann eine elektronische Zusatzeinrichtung im Mähdrescher zur Unterstützung des Bedieners bzw. Fahrers sein. Das Fahrerassistenzsystem kann dabei teilautonom oder autonom ausgeführt sein. Das Fahrerassistenzsystem kann direkt mit den Arbeitsorganen verbunden sein.

Eine Ernteprozeßstrategie kann sich auf eine geplante und systematische Vorgehensweise zur optimalen Ernte von landwirtschaftlichen Produkten beziehen. Die Ernteprozeßstrategie kann die Auswahl des besten Zeitpunkts, der geeigneten Methoden und der erforderlichen Ausrüstung umfassen, um die Qualität und Quantität der Ernte zu maximieren. Durch eine einmalige Auswahl einer Ernteprozeßstrategie kann eine Art und Weise der Ansteuerung der Arbeitsorgane vorgegeben werden. Für die Ermittlung der Einstellparameter ist möglicherweise eine weitere Eingabe vom Bediener nicht erforderlich. Der Bediener bzw. Fahrer hat aber die Möglichkeit, die gewählte Ernteprozeßstrategie auf Wunsch zu ändern, so dass daraufhin weiter eine autonome Ansteuerung stattfinden kann, jedoch dann ggf. mit einer anderen Priorisierung.

Die autonome Ermittlung des mindestens einen Einstellparameters kann sich auf die Fähigkeit des Einstellautomaten beziehen, ohne menschliches Eingreifen eigenständig einen oder mehrere Einstellparameter zu bestimmen, die für den optimalen Betrieb der landwirtschaftlichen Arbeitsmaschine notwendig sind. Dies kann durch den Einsatz von Algorithmen und maschinellem Lernen geschehen, um aktuelle Bedingungen zu analysieren und entsprechende Anpassungen vorzunehmen. Die Einstellparameter können zur Einstellung der Arbeitsorgane verwendet werden.

Der Einstellautomat kann ein oder mehrere Arbeitsorgane ansteuern, indem beispielsweise ein elektrisches Signal vom Einstellautomat an ein Arbeitsorgan oder eine Mehrzahl von Arbeitsorganen übermittelt wird. Das elektrische Signal kann Informationen umfassen, die es dem Arbeitsorgan ermöglichen einen Teilarbeitsprozess durchzuführen. Beispielsweise kann die Information das Arbeitsorgan veranlassen, den Teilarbeitsprozess zu beginnen. Mit anderen Worten kann die Ansteuerung das gerichtete Beeinflussen des Verhaltens der Arbeitsorgane mittels der Einstellparameter bedeuten.

Zur gesamtheitlichen Ansteuerung der Arbeitsorgane kann ein einziger Einstellautomat vorgesehen sein, wobei der einzige Einstellautomat als eigenständig arbeitende Einheit ausgebildet sein kann. Mit anderen Worten kann die landwirtschaftliche Arbeitsmaschine einen einzigen Einstellautomaten aufweisen. Der Einstellautomat kann als eigenständige Einheit seine Aufgaben und Ziele unabhängig und ohne kontinuierliche externe Steuerung erfüllen. Die gesamtheitliche Ansteuerung kann bedeuten, dass alle Arbeitsorgane ansteuerbar sind oder gleichzeitig angesteuert werden können. Beispielsweise können mittels des Einstellautomaten gesamtheitlich alle Einstellparameter für die landwirtschaftliche Arbeitsmaschine bzw. Arbeitsorgane bestimmt werden. Dabei kann der Einstellautomat über die notwendige Autonomie, Ressourcen und Verantwortlichkeit verfügen, um selbstständig zu arbeiten und seine Ergebnisse zu erreichen. Der Einstellautomat kann dabei als Zusammenfassung bzw. Vereinheitlichung einer Vielzahl einzelner Automaten (bspw. Vorsatzgeräteautomat, Dreschautomat, Trennautomat, Reinigungsautomat und/oder ein Verteilautomat) verstanden werden. Es ist möglich, dass der Einstellautomat gesamtheitlich mehrere Arbeitsorgane gleichzeitig ansteuert. Mit anderen Worten kann eine Vielzahl von Automaten, die jeweils einem Teilarbeitsprozess zugewiesen sind, in einem Einstellautomaten zusammengefasst werden. Dadurch kann ermöglicht werden, dass eine Vielzahl von Automaten nicht mehr notwendig ist, sondern nur noch ein Einstellautomat zum Einsatz kommt, der möglicherweise gesamtheitlich alle Teilbearbeitungsprozesse eines Gesamtbearbeitungsprozesses zur Verarbeitung von Erntegut steuern kann. Möglicherweise kann dabei auf einen Prozesssupervisor verzichtet werden, weil der Prozesssupervisor möglicherweise nicht mehr notwendig ist. Vorteile des Einstellautomaten könnten eine verbesserte Übersichtlichkeit, einfache Wartung und Updates, Effizienzsteigerung, Kosteneinsparungen, verbesserte Datenintegration, bessere Kommunikation und Zusammenarbeit, Skalierbarkeit sowie erhöhte Sicherheit sein.

Dem Einstellautomat kann die Aufgabe zukommen, den Gesamtbearbeitungsprozess zu optimieren, indem dieser gezielt Einfluss auf die Arbeitsorgane nimmt. Der Einstellautomat kann dabei möglicherweise die Ansteuerung der Arbeitsorgane optimieren. Die Optimierung der Ansteuerung von Arbeitsorganen kann sich auf die Verbesserung der Steuerungsprozesse und -mechanismen beziehen, die den Betrieb und die Koordination des Mähdreschers (oder Systemkomponenten) regeln, um dessen Effizienz, Genauigkeit und Leistungsfähigkeit zu maximieren. Dabei kann der Einstellautomat zu einer schnellen und robusten Ansteuerung der Arbeitsorgane beitragen.

Die Zielgröße des Einstellautomaten kann eine Variable oder ein Signal sein, die als Ergebnis einer Modellberechnung oder -simulation erzeugt wird. Der Einstellautomat oder die Rechenvorrichtung kann möglicherweise auf das Gesamtmodell zugreifen, wobei das Gesamtmodell die Zielgröße zur Verfügung stellt.

Anhand dieses funktionalen Zusammenhangs des Gesamtmodells kann in Abhängigkeit von unterschiedlichen Betriebssituationen jeweils auf Einstellparameter geschlossen werden, die eine optimierte Durchführung des Teilbearbeitungsprozesses ermöglichen bzw. die das Erreichen des Ziels einer Ernteprozessstrategie ermöglichen. Das Gesamtmodell kann dabei die mehreren Einflussgrößen als Eingänge aufweisen. Ferner kann das Gesamtmodell die Zielgröße als Ausgang aufweisen. Mit anderen Worten kann ein MISO-System (Multiple Input, Single Output) für den Einstellautomat vorgesehen sein.

Die Einflussgrößen können auf einen Mähdrescher wirkende Faktoren sein, die möglicherweise auf den Mähdrescher wirken und die Effizienz und Leistung der Maschine bestimmen. Innere Einflussgrößen können sich auf die von innen wirkenden Faktoren beziehen. Innere Einflussgrößen können die Motorkapazität, Schneidwerksbreite, Dreschtrommeldrehzahl, Siebeinstellungen und den Zustand der Verschleißteile betreffen. Äußere Einflussgrößen können sich auf die von außen auf den Mähdrescher wirkenden Faktoren beziehen. Äußere Einflussgrößen können die Beschaffenheit des Ernteguts (wie Feuchtigkeitsgehalt und Halmfestigkeit), die Bodenverhältnisse, das Wetter (Temperatur und Niederschlag) sowie das Geländeprofil des Feldes betreffen. Einflussgrößen können sich auf die Arbeitsbedingungen und somit auf die Leistung und den Energieverbrauch des Mähdreschers auswirken. Ein optimales Zusammenspiel dieser Einflussgrößen kann entscheidend für eine effiziente Ernte sein.

Die Arbeitsorgane können zur Durchführung spezifischer Teilbearbeitungsprozesse eines Gesamtbearbeitungsprozesses zur Verarbeitung von Erntegut vorgesehen sein. Dabei kann jedem Arbeitsorgan ein spezifischer Teilbearbeitungsprozess zugewiesen sein.

Ein Teilarbeitsprozess kann beispielsweise ein Dreschprozess, ein Abscheideprozess oder ein Reinigungsprozess sein. Dabei kann der Gesamtbearbeitungsprozess eine Vielzahl von Teilarbeitsprozessen umfassen. Der Gesamtbearbeitungsprozess kann dabei alle Schritte für die Verarbeitung von Erntegut betreffen (bspw. Dreschen, Abscheiden, Reinigen, etc.). Für jeden Teilbearbeitungsprozess können die funktionalen Zusammenhänge vorzugsweise in dem Speicher des Fahrerassistenzsystems hinterlegt sein, auf welchen der (einzige) Einstellautomat zur autonomen Bestimmung der Einstellparameter des korrespondierenden Arbeitsorgans zugreifen kann. Dabei können die funktionalen Zusammenhänge im laufenden Erntebetrieb kontinuierlich auf den aktuellen Ernteprozesszustand abgeglichen werden.

Bei dem Speicher zum Hinterlegen von Daten kann es sich um ein übliches digitales Speichermedium handeln, beispielsweise ein Speicherlaufwerk. Hinterlegte Daten können Informationen sein, die im Speicher des Fahrerassistenzsystems gespeichert werden, um dessen Betrieb und/oder den Betrieb des Mähdreschers zu steuern und zu optimieren. Diese Daten können Einstellparameter, Regelparameter, Befehle oder sonstige Signale zur Ansteuerung umfassen.

Eine Ausführungsform des ersten Aspekts bezieht sich auf einen Mähdrescher, wobei die auswählbaren Ernteprozeßstrategien jeweils auf die Zielvorgabe der Einstellung oder der Optimierung einer Zielgröße wie "Ausdruschverluste", "Bruchkornanteil", "Abscheideverluste", "Reinigungsverluste", "Schlupf-Dreschwerk-Antrieb", "Kraftstoffverbrauch" durch eine entsprechende Vorgabe von Einflussgrößen gerichtet sind.

Ein Reinigungsverlust kann ein unerwünschtes Ausscheiden von Korn während des Reinigungsprozesses des Mähdreschers sein. Abscheideverluste können die unerwünschten Verluste von Korn während des Abscheideprozesses sein, typischerweise durch unvollständige Trennung von Korn von Stroh oder anderen Pflanzenmaterialien.

Weitere Zielgrößen können das Überkehrvolumen, der Kornanteilüberkehr, Material other than Grain oder Broken Grain sein. Das Überkehrvolumen kann die Menge an Erntegut sein, die während des Dresch- und Reinigungsprozesses an den Seiten des Mähdreschers über die Ränder des Schneidwerks oder der Siebe fällt. Der Kornanteilüberkehr kann die Menge an Korn sein, die während des Dreschvorgangs über die Siebe des Mähdreschers verloren geht und nicht in den Korntank gelangt. Material other than Grain (MOG) oder auch Fremdbestandteile können unerwünschte Materialien wie Stroh, Blätter oder Unkraut, die während des Dresch- und Reinigungsprozesses zusammen mit dem Korn geerntet werden. Broken Grain können beschädigte oder zerbrochene Körner sein, die während des Dresch- und Abscheideprozesses entstehen und die Qualität des geernteten Korns mindern können.

Eine Ausführungsform des ersten Aspekts bezieht sich auf einen Mähdrescher, wobei die Zielgröße mindestens einem Kennlinienfeld zur Abbildung der funktionalen Zusammenhänge zugeordnet ist, wobei die Zielgröße auf Basis einer Ausgangsgröße des mindestens einem Kennlinienfeld gebildet wird.

Ein Vorteil der Zuordnung der Zielgröße zu mindestens einem Kennlinienfeld könnte darin liegen, dass eine präzise und datenbasierte Optimierung ermöglicht wird. Dadurch könnten Abweichungen und ineffiziente Betriebszustände frühzeitig erkannt und korrigiert werden.

Eine Ausführungsform des ersten Aspekts bezieht sich auf einen Mähdrescher, wobei die inneren Einflussgrößen einen Arbeitsorganparameter umfassen und wobei der Arbeitsorganparameter als zumindest einer der folgenden ausgebildet ist:

eine Dreschtrommeldrehzahl;
eine Dreschkorbweite;
eine Rotordrehzahl;
eine Gebläsedrehzahl;
eine Stellung einer Rotorabdeckung;
eine Stellung einer Klappenöffnung;
eine Stellung eines Obersiebs und/oder
eine Stellung eines Untersiebs.

Mit anderen Worten kann ein Arbeitsorganparameter oder Maschinenparameter des Mähdreschers möglicherweise eine Einflussgröße des Einstellautomaten bilden. Der Einstellautomat kann Parameter, wie die Einstellparameter oder andere Signale, beispielsweise nach einer Berechnung oder Optimierung an andere Vorrichtungen der landwirtschaftlichen Arbeitsmaschine bzw. des Mähdreschers übermitteln.

Eine Ausführungsform des ersten Aspekts bezieht sich auf einen Mähdrescher, wobei die äußeren Einflussgrößen einen Gutparameter umfassen und wobei der Gutparameter als zumindest einer der folgenden ausgebildet ist:

eine Bestandsdichte,
eine Dreschbarkeit und/oder
eine Bestandsfeuchte.

Eine Ausführungsform des ersten Aspekts bezieht sich auf einen Mähdrescher, wobei das Gesamtmodell auf einem regularisierten Modell basiert.

Ein Gesamtmodell kann beispielsweise ein mathematisches Modell sein. Das mathematische Modell, beispielsweise ein Regressionsmodell, kann eine abstrakte Darstellung eines realen Systems oder Prozesses sein, die durch mathematische Gleichungen oder Formeln beschrieben werden können. Es ist allgemein bekannt, dass ein mathematisches Modell bzw. die Koeffizienten eines mathematischen Modells mittels der Methode der kleinsten Quadrate bzw. "method of least squares" bestimmt werden:

$$\hat{c} = (X^T X)^{-1} X^T y$$

Ein regularisiertes Modell kann sich auf ein Modell beziehen, das spezielle Steuerungs- oder Regelungselemente enthält, um das Systemverhalten zu beeinflussen oder zu optimieren. In einem regulierten Modell können zusätzliche Terme oder Parameter vorhanden sein, die die Dynamik oder Stabilität des Systems modellieren und regeln:

$$\hat{c} = (X^T X + \lambda R)^{-1} (X^T y + \lambda c^*)$$

Das regularisierte Modell bzw. Regressionsmodell könnte mehrere Vorteile bieten. Es könnte Overfitting vermeiden, indem es die Modellkomplexität reduziert, etwa durch die Lasso-Regularisierung, die einige Koeffizienten auf Null setzt, oder die Ridge-Regularisierung, die große Koeffizienten bestraft. Dies könnte auch die Modellinterpretierbarkeit verbessern, da nur die wichtigsten Merkmale ausgewählt würden. Zudem könnte die Stabilität der Schätzungen erhöht werden, da das Modell weniger anfällig für kleine Änderungen in den Trainingsdaten wäre. Regularisierung könnte auch helfen, Probleme mit Multikollinearität zu mildern und somit zu stabileren Schätzungen führen. Ein regularisiertes Modell könnte besser generalisieren und somit eine verbesserte Vorhersageleistung auf Testdaten zeigen. Darüber hinaus könnte das regularisierte Modell extrem große Koeffizienten vermeiden und dadurch ein stabileres und realistischeres Modell schaffen. Schließlich könnte die Berechnungseffizienz durch optimierte Algorithmen gewährleistet sein, was besonders bei großen Datensätzen von Vorteil wäre.

Eine Ausführungsform des ersten Aspekts bezieht sich auf einen Mähdrescher, wobei der Mähdrescher ein Aktuatorsystem umfasst und das Aktuatorsystem eine Vielzahl von Aktuatoren aufweist, wobei die Vielzahl der Aktuatoren mit dem Einstellautomaten in Verbindung stehen und wobei mittels jeweils eines Aktuators eines der Arbeitsorgane ansteuerbar ist.

Es ist möglich, dass die Rechenvorrichtung mit dem Aktuatorsystem oder der Vielzahl von Aktuatoren in Verbindung steht. Somit kann die Rechenvorrichtung Signale, Befehle oder Informationen über die Einstellparameter an das Aktuatorsystem übermitteln.

Bei einem Aktuator kann es sich um eine antriebstechnische Baueinheit handeln, die ein elektrisches Signal (bspw. vom Fahrerassistenzsystem ausgegebene Befehle) in mechanische Bewegungen bzw. Veränderungen physikalischer Größen (bspw. Druck oder Temperatur) umsetzen und damit aktiv in einen gesteuerten Prozess eingreifen. Beispiele für Aktuatoren können Ventile, Zylinder (bspw. Pneumatikzylinder, Hydraulikzylinder, Elektrozylinder), elektromechanische Antriebe, Elektromotoren oder Piezoelemente sein. Der Aktuator kann Teil des Arbeitsorgans sein oder im Arbeitsorgan eingebettet sein. Beispielsweise kann der Aktuator ein Hydraulikmotor sein, der die Dreschtrommel des Mähdreschers antreibt.

Eine Ausführungsform des ersten Aspekts bezieht sich auf einen Mähdrescher, wobei die Rechenvorrichtung das Gesamtmodell im laufenden Erntebetrieb zyklisch auf einen aktuellen Ernteprozesszustand abgleicht und wobei eine Sensoranordnung zur Erfassung zumindest eines Teils des Ernteprozesszustands vorgesehen ist.

Das zyklisch auf einen aktuellen Ernteprozesszustand Abgleichen kann bedeuten, dass in regelmäßigen, wiederkehrenden Intervallen der aktuelle Zustand des Ernteprozesses überprüft und mit den gewünschten oder optimalen Betriebsbedingungen verglichen wird. Dieser Abgleich kann möglicherweise kontinuierlich während des Ernteprozesses erfolgen, um sicherzustellen, dass alle Parameter und Einstellungen des Mähdreschers optimal auf die aktuellen Bedingungen und Anforderungen abgestimmt sind. Dies kann eine fortlaufende Anpassung und Optimierung des Betriebs bedeuten, um Effizienz und Leistung zu maximieren.

Die Sensoranordnung kann eine Vielzahl von Sensoren umfassen. Ein Sensor kann ein technisches Bauteil sein, das bestimmte physikalische oder chemische Eigenschaften (physikalisch z. B. Wärmemenge, Temperatur, Feuchtigkeit, Druck, Schallfeldgrößen, Helligkeit, Beschleunigung oder chemisch) und/oder die stoffliche Beschaffenheit seiner Umgebung qualitativ oder als Messgröße quantitativ erfassen kann. Von einem Sensor erfasste Daten können dem Einstellautomaten oder der Rechenvorrichtung übermittelt werden. Mit anderen Worten kann der Einstellautomat mittels der vom Sensor erfassten Daten Berechnungen durchführen. Die Eingänge des Gesamtmodells bzw. des mathematischen Modells können die vom Sensor erfassten Daten umfassen. Ferner können die inneren Einflussgrößen und/oder die äußeren Einflussgrößen mittels der Sensoranordnung erfasst werden.

Eine Ausführungsform des ersten Aspekts bezieht sich auf einen Mähdrescher, wobei die Sensoranordnung einen Abscheideverlustsensor, einen Reinigungsverlustsensor, einen Bruchkornsensor und/oder einen Ausdruschverlustsensor umfasst.

Mit anderen Worten können mittels zumindest eines Sensors der Sensoranordnung beispielsweise einer oder mehrere der Ernteprozeßparameter "Ausdruschverluste", "Bruchkornanteil", "Schichthöhe", "Abscheideverluste", "Reinigungsverluste", "Dreschwerksbelastung", "Kraftstoffverbrauch" erfassbar sein.

Eine Ausführungsform des ersten Aspekts bezieht sich auf einen Mähdrescher, wobei als Arbeitsorgane eine Dreschvorrichtung, eine Abscheidevorrichtung und eine Reinigungsvorrichtung vorgesehen sind und/oder wobei das Fahrerassistenzsystem mit einer Dreschvorrichtung, einer Abscheidevorrichtung und einer Reinigungsvorrichtung einen Einstellautomaten bildet.

Als Arbeitsorgane können auch zumindest ein Vorsatzgerät und/oder eine Verteilvorrichtung vorgesehen sein. Weitere Beispiele eines Arbeitsorgans kann eine Abscheidevorrichtung, die als Hordenschüttler oder als eine Axialabscheidevorrichtung mit einem oder zwei Trennrotoren ausgebildet sein kann, oder eine Verteilvorrichtung sein. Die Verteilvorrichtung kann eine Spreuverteileinrichtung, eine Häckseleinrichtung und/oder eine Verteileinrichtung zur Verteilung zumindest des von der Häckseleinrichtung bereitgestellten Erntegutes umfassen.

Ein Vorteil der Zusammenfassung der Dreschvorrichtung, der Abscheidevorrichtung und der Reinigungsvorrichtung zu einem einzigen Einstellautomaten kann es sein, dass weniger Berechnungen notwendig sind oder sich die Berechnung einfacher durchführen lässt. Zudem können diese Vorrichtungen gleiche Einflussgrößen haben, die mittels eines einzigen Einstellautomaten besser erfasst und analysiert werden können als durch eine Vielzahl einzelner Automaten. Der Einstellautomat kann vorteilhafterweise eine übergeordnete Einheit bilden, die die Arbeitsweise der Dreschvorrichtung, der Abscheidevorrichtung und der Reinigungsvorrichtung gleichzeitig überwacht und steuert.

In einem weiteren Aspekt kann ein computer-implementiertes Verfahren zum Trainieren eines Einstellautomaten vorgesehen sein. Dabei kann der Einstellautomat der gesamtheitlichen Ansteuerung von Arbeitsorganen des Mähdreschers nach einem ersten Aspekt der Erfindung dienen. Das computer-implementierte Verfahren kann umfassen: Erfassen von Trainingsdaten, wobei die Trainingsdaten optional während des Betriebs des Mähdreschers erfasst werden; und

Trainieren des Einstellautomaten mittels Minimierens einer Verlustfunktion, wobei die Verlustfunktion basierend auf einer einzigen Ausgangsgröße des Einstellautomaten und den Trainingsdaten ermittelt wird.

In einem weiteren Aspekt kann ein computer-implementiertes Verfahren zum Optimieren eines Betriebspunktes eines Mähdreschers nach einem ersten Aspekt der Erfindung mittels eines einzigen Einstellautomaten. Dabei kann das computer-implementierte Verfahren umfassen:

Trainieren des einzigen Einstellautomaten mittels des Verfahrens nach einem vorgenannten Aspekt;
Ermitteln von Einstellparametern basierend auf dem trainierten Einstellautomaten; und
Ansteuern der Arbeitsorganen des Mähdreschers basierend auf den Einstellparametern.

Das Ermitteln von Einstellparametern kann beispielsweise derart erfolgen, dass die Einflussgrößen bzw. Eingangsgrößen des Einstellautomaten variiert werden. Dabei können die Einflussgrößen so lange variiert werden, bis die Zielgröße einen vorbestimmten Minimalwert annimmt.

Bevorzugt kann der zumindest eine Regelungsprozess in dem Speicher des Fahrerassistenzsystems hinterlegt sein. Der zumindest eine Regelungsprozess kann auf Grundlage eines Regelwerkes oder einer Reglerstruktur erfolgen. Unter Einstellparametern können arbeitsorganspezifische Maschinenparameter zur Einstellung von Erntegutbehandlungsmitteln durch zumindest eine den Erntegutbehandlungsmitteln zugeordnete Aktuator verstanden werden, welche vom Einstellautomaten eigenständig ermittelt werden. Einstellparameter des Arbeitsorgans Vorsatzgeräte respektive Schneidwerk können unter anderem Messerbalkenhöhe, Schnittwinkel, Haspelposition und dergleichen mehr sein. Erntegutbehandlungsmittel im Fall des Schneidwerks sind beispielsweise Messerbalken, Haspel, Einzugswalze und dergleichen, denen eine Aktuator zugeordnet sein kann, um diese Erntegutbehandlungsmittel einzustellen und/oder zu betreiben. Unter dem Begriff Prozessqualitätsparametern kann im Fall des Arbeitsorganes Schneidwerks Aufnahmeverluste, Schnittährenverluste, Spritzkörnerverluste, etc. zu verstehen sein.

Prozessqualitätsparameter können ein Bewertungskriterium für eine optimale Einstellung des Arbeitsorgans durch den Einstellautomaten sein. Entsprechendes kann für die weiteren zur Durchführung von Teilbearbeitungsprozessen vorgesehenen Arbeitsorgane des Mähdreschers sein.

Der Einstellautomat kann zur Optimierung des Gesamtbearbeitungsprozesses bei einem Betrieb des Mähdreschers im Teillastbetrieb eingerichtet sein. So kann beispielsweise aufgrund eines fahrgeschwindigkeitsbedingten Teillastbetriebes die Ernteprozessstrategie "maximaler Durchsatz" nicht erreicht werden. Um dennoch den Gesamtbearbeitungsprozess im Rahmen solcher Randbedingungen zu optimieren, kann der Einstellautomat Prioritäten selbsttätig verschieben bzw. neu festlegen.

Das Fahrerassistenzsystem kann insbesondere für einen Mähdrescher vorgesehen sein. Es ist auch möglich, dass das Fahrerassistenzsystem in einer anderen landwirtschaftlichen Arbeitsmaschine, bspw. einem Feldhäcksler, zum Einsatz kommt.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigen:

Fig. 1    eine schematische Darstellung eines Mähdreschers in Seitenansicht gemäß einer Ausführungsform;

Fig. 2    eine schematische Darstellung des Funktionsprinzips des Fahrerassistenzsystems gemäß einer Ausführungsform;

Fig. 3    eine schematische Darstellung des Funktionsprinzips des Einstellautomaten gemäß einer Ausführungsform;

Fig. 4    eine schematische Darstellung des Funktionsprinzips des Einstellautomaten mit mehreren Gesamtmodellen gemäß einer Ausführungsform.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugzeichen beziehen sich auf gleiche oder zumindest funktionell oder strukturell ähnliche Merkmale.

Im Allgemeinen gilt ein beschriebenes Verfahren auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

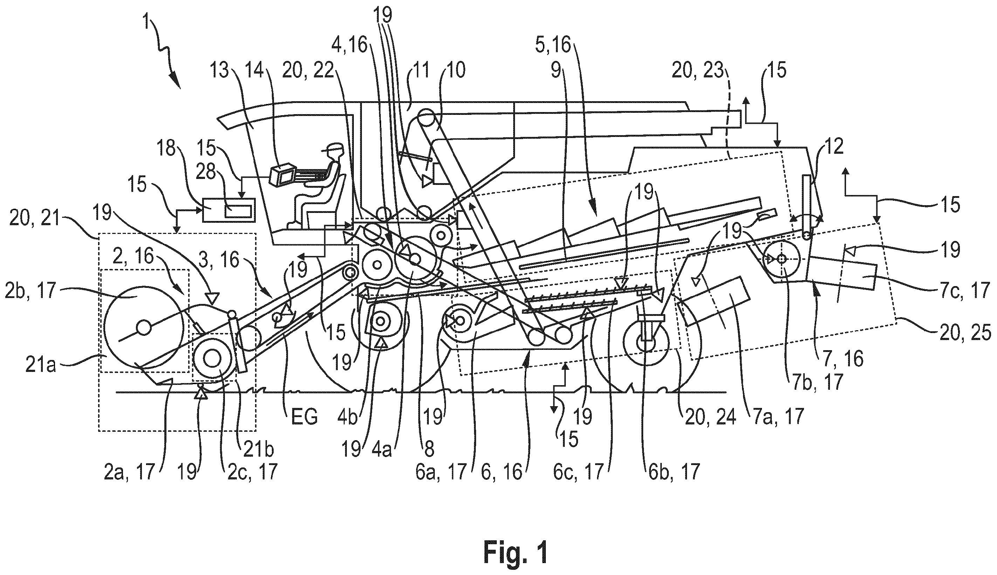

Ein in Fig. 1 schematisch dargestellter Mähdrescher 1 nimmt in seinem frontseitigen Bereich ein als Schneidwerk 2 ausgebildetes Vorsatzgerät auf, welches in an sich bekannter Weise mit einem Schrägförderer 3 des Mähdreschers 1 verbunden ist. Ein den Schrägförderer 3 durchlaufender Erntegutstrom EG wird von dem Schrägförderer 3 an eine Dreschvorrichtung 4 des Mähdreschers 1 übergeben. Von der Dreschvorrichtung 4 wird ein austretender Teilgutstrom des Erntegutstroms EG, der im Wesentlichen Nichtkornbestandteile wie Spreu und Stroh enthält, an eine als Hordenschüttler ausgeführte Trennvorrichtung 5 übergeben. Ein weiterer Teilgutstrom, der im Wesentlichen aus dem Erntegut abgeschiedene Körner enthält, gelangt von der Dreschvorrichtung 4 auf einen Förderboden 8. Es liegt im Rahmen der Erfindung, dass die Trennvorrichtung 5 auch als an sich bekannter und deshalb nicht dargestellter Trennrotor ausgeführt sein kann. Von der Trennvorrichtung 5 wird der Teilgutstrom des Erntegutsstroms EG so gefördert, dass in dem Teilgutstrom 5 enthaltene freibewegliche Körner im untenseitigen Bereich der Trennvorrichtung 5 abgeschieden werden. Sowohl die von der Dreschvorrichtung 4 als auch durch die Trennvorrichtung 5 aus dem Erntegutstrom EG abgeschiedenen Körner werden über einen Rücklaufboden 9 und Förderboden 8 einer Reinigungsvorrichtung 6 zugeführt. Von der Reinigungsvorrichtung 6 gelangt ein gereinigter Körnerstrom schließlich mittels einer Fördervorrichtung 10 in einen Korntank 11 des Mähdreschers 1.

Im rückwärtigen Bereich der als Hordenschüttler ausgeführten Trennvorrichtung 5 ist dieser eine Häcksel- und Verteilvorrichtung 7 nachgeordnet. Der Häcksel- und Verteilvorrichtung 7 wird die Trennvorrichtung 5 in ihrem rückwärtigen Bereich verlassendes Stroh zugeführt, welches wahlweise direkt auf dem Boden in einem Schwad abgelegt oder von der Häcksel- und Verteilvorrichtung 7 zerkleinert und vorzugsweise im Wesentlichen über die Breite des Vorsatzgerätes 2 verteilt auf dem Boden ausgebracht wird. Für eine Ablage des Strohs auf dem Boden ist eine sogenannte Strohklappe 12 vorgesehen, durch welche das Stroh an der Häcksel- und Verteilvorrichtung 7 vorbei umgelenkt wird.

Das als Getreideschneidwerk ausgebildete Vorsatzgerät 2 umfasst einen oszillierend angetriebenen Messerbalken 2a, eine positionsveränderliche Haspel 2b sowie eine Einzugsschnecke 2c. Die Dreschvorrichtung 4 umfasst zumindest eine drehzahlvariabel antreibbare Dreschtrommel 4a, welche untenseitig abschnittsweise von zumindest einem Dreschkorb 4b ummantelt ist. Bevorzugt ist die Dreschvorrichtung 4 als ein Mehrtrommeldreschwerk ausgebildet. Der Abstand des Dreschkorbes 4b zu der zumindest einen Dreschtrommel 4a ist veränderbar. Die Öffnungsweite des Dreschkorbes 4b ist veränderbar. Die Reinigungsvorrichtung 6 weist ein drehzahlvariables Gebläse 6a, eine neigungsveränderliche Siebanordnung mit zumindest einem Obersieb 6b und einem Untersieb 6c auf. Das Obersieb 6b und das Untersieb 6c werden oszillierend angetrieben und weisen Sieböffnungen veränderlicher Öffnungsweite auf. Die Häcksel- und Verteilvorrichtung 7 umfasst eine Spreufördereinrichtung 7a, eine drehzahlvariabel antreibbare Häckseleinrichtung 7b sowie eine Verteileinrichtung 7c. Bevorzugt ist die Verteileinrichtung 7c als Radialverteiler ausgebildet. Die Häckseleinrichtung 7b umfasst eine rotierend angetriebene Messertrommel sowie eine positionsveränderbare Gegenmesseranordnung. Die Spreufördereinrichtung 7a ist als Spreuwurfgebläse, welches die Spreu der Verteileinrichtung 7c zuführt, um gemeinsam mit dem gehäckselten Stroh von der Verteileinrichtung 7c verteilt zu werden, oder als Spreuverteilgebläse, welche die Spreu unmittelbar auf dem Boden verteilt, betreibbar.

Das Vorsatzgerät 2, die Dreschvorrichtung 4, die Trennvorrichtung 5, die Reinigungsvorrichtung 6 sowie die Häcksel- und Verteilvorrichtung 7 werden nachfolgend verallgemeinernd als Arbeitsorgane 16 bezeichnet, die der Durchführung von arbeitsorganspezifischen Teilbearbeitungsprozessen eines Gesamtbearbeitungsprozesses dienen. Die nicht abschließend aufgezählten Komponenten 2a, 2b, 2c, 4a, 4b, 6a, 6b, 6c, 7a, 7b, 7c der Arbeitsorgane 16 werden nachfolgend verallgemeinernd als Erntegutbehandlungsmittel 17 bezeichnet.

Weiter verfügt der Mähdrescher 1 über eine Fahrerkabine 13, in der zumindest eine grafische Benutzerschnittstelle 14 angeordnet ist, welche an ein Bussystem 15 des Mähdreschers 1 angeschlossen ist. Ein Fahrerassistenzsystem 18 kommuniziert durch das Bussystem 15 in an sich bekannter Weise mit der grafischen Benutzerschnittstelle 14 sowie einer Vielzahl von Sensorsystemen 19. Einzelheiten bezüglich der Struktur der Sensorsysteme 19 sind detailliert in der Offenlegungsschrift DE 101 47 733 A1 beschrieben, auf deren Inhalt hiermit vollumfänglich Bezug genommen wird, sodass im Folgenden die Struktur der Sensorsysteme 19 nicht nochmals beschrieben wird.

Das Sensorsystem 19 kann insbesondere einen Abscheideverlustsensor, einen Reinigungsverlustsensor, einen Bruchkornsensor und/oder einen Ausdruschverlustsensor umfassen.

Das Fahrerassistenzsystem 18 ist zur Ansteuerung der Arbeitsorgane 16 vorgesehen, wobei es eine Bedienperson des Mähdreschers 1 bei der Optimierung der Einstellung der Arbeitsorgane 16 unter Berücksichtigung von Erntebedingungen unterstützen soll.

Das Fahrerassistenzsystem 18 umfasst einen Speicher zum Hinterlegen von Daten und eine Rechenvorrichtung zur Verarbeitung der in dem Speicher hinterlegten Daten.

Es ist vorgesehen, dass die Arbeitsorgane zusammen mit dem Fahrerassistenzsystem 18 einen Einstellautomaten 20 bilden, indem im Speicher eine Mehrzahl auswählbarer Ernteprozeßstrategien hinterlegt sind und indem die Rechenvorrichtung dazu eingerichtet ist, zur Umsetzung der jeweils ausgewählten Ernteprozeßstrategie mindestens einen Einstellparameter autonom zu ermitteln und den Arbeitsorgane gesamtheitlich vorzugeben.

Aus dem Stand der Technik ist es bekannt, eine Vielzahl von Automaten zu einzurichten, d.h. beispielsweise einen Vorsatzgeräteautomat 21, einen Dreschautomat 22, einen Trennautomat 23, einen Reinigungsautomat 24 sowie einen Verteilautomat 25. Der Vorsatzgeräteautomat 21 kann ferner zwei Unterautomaten umfassen, einen Haspelautomaten 21a, welcher der Ansteuerung der Haspel 2b dient, sowie einen Einzugsautomaten 21b, welcher der Ansteuerung der Einzugsschnecke 2c dient.

Der Einstellautomat kann erfindungsgemäß die Aufgaben der Vielzahl von aus dem Stand der Technik bekannten Automaten übernehmen, beispielsweise die Aufgabe der vorgenannten Automaten. Der Einstellautomat kann somit als Vereinheitlichung einer Vielzahl von Automaten verstanden werden.

Teilbearbeitungsprozesse des Vorsatzgerätes 2 können die Gutannahme durch die Haspel 2b sowie Abförderung des Erntegutstroms EG durch die Einzugsschnecke 2c sein. Teilbearbeitungsprozesse von Dreschvorrichtung 4, Trennvorrichtung 5, Reinigungsvorrichtung 6 sowie Häcksel- und Verteilvorrichtung 7 sind entsprechend insbesondere das Dreschen, Trennen, Reinigen sowie Häckseln- und Verteilen des Erntegutstroms EG.

Der Mähdrescher 1 kann ferner ein Aktuatorsystem mit einer Vielzahl von Aktuatoren aufweisen. Die Aktuatoren können jeweils Teil einer der Arbeitsorgane 16 sein oder in den Arbeitsorganen 16 eingebettet sein. Beispielsweise ist einer der Aktuator ein Hydraulikmotor, der die Dreschtrommel 4a des Mähdreschers 1 antreibt. Die Vielzahl der Aktuatoren stehen dabei mit dem Einstellautomaten 20 in Verbindung. Jeweils eines der Arbeitsorgane 16 kann mittels jeweils eines Aktuators ansteuerbar sein.

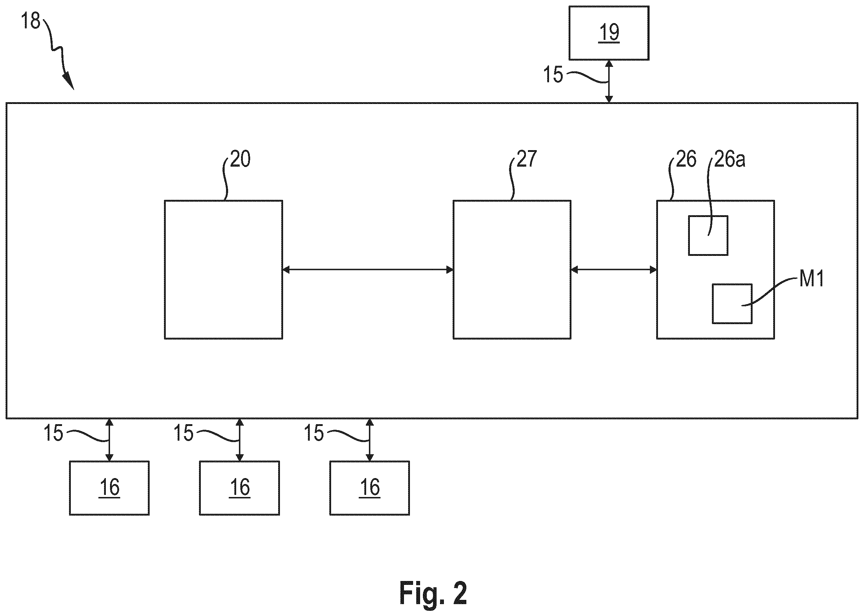

In Fig. 2 ist schematisch das Funktionsprinzip des Fahrerassistenzsystems 18 dargestellt.

Die Arbeitsorgane 16 bilden zusammen mit dem Fahrerassistenzsystem 18 einen Einstellautomaten 20, indem im Speicher 26 eine Mehrzahl auswählbarer Ernteprozeßstrategien 26a hinterlegt sind und indem die Rechenvorrichtung 27 dazu eingerichtet ist, zur Umsetzung der jeweils ausgewählten Ernteprozeßstrategie 26a mindestens einen Einstellparameter autonom zu ermitteln und den Arbeitsorganen 16 gesamtheitlich vorzugeben.

Vom Sensorsystem 19 erfasste Daten der einzelnen Arbeitsorgane 16 bzw. ihrer Erntegutbehandlungsmittel 17 werden dem Einstellautomaten 20 via dem Bussystem 15 übermittelt und somit zur Verfügung gestellt. Der Einstellautomat 20 generiert Ausgangsgrößen, welche zu einer Änderung von Einstellparametern der Arbeitsorgane 16 bzw. ihrer Erntegutbehandlungsmittel 17 verwendet werden.

Die Ernteprozessstrategien 26a können mittels der grafischen Benutzerschnittstelle 14 darstellbar und auswählbar sein. Als auswählbare Ernteprozessstrategie 26a kommen beispielsweise das Erzielen eines maximalen Durchsatzes, eine zu erreichende Qualität des bearbeiteten Erntegutes hinsichtlich Sauberkeit, Bruchkornanteil und/oder ein effizienter Betrieb des Mähdreschers 1 in Betracht.

Im Speicher 26 ist ein Gesamtmodell M1 pro Zielgröße hinterlegt. Dabei bildet das Gesamtmodell M1 funktionale Zusammenhänge zwischen der Zielgröße und mehreren Einflussgrößen. Die Rechenvorrichtung 27 ist beispielhaft dazu eingerichtet, die autonome Ermittlung mindestens eines Einstellparameters basierend auf dem Gesamtmodell M1 vorzunehmen.

Anhand des funktionalen Zusammenhangs des Gesamtmodells M1 wird vom Einstellautomat 20 in Abhängigkeit von den unterschiedlichen Betriebssituationen auf Einstellparameter der Arbeitsorgane 16 geschlossen, die das Erreichen des Ziels der Ernteprozessstrategie 26a ermöglichen.

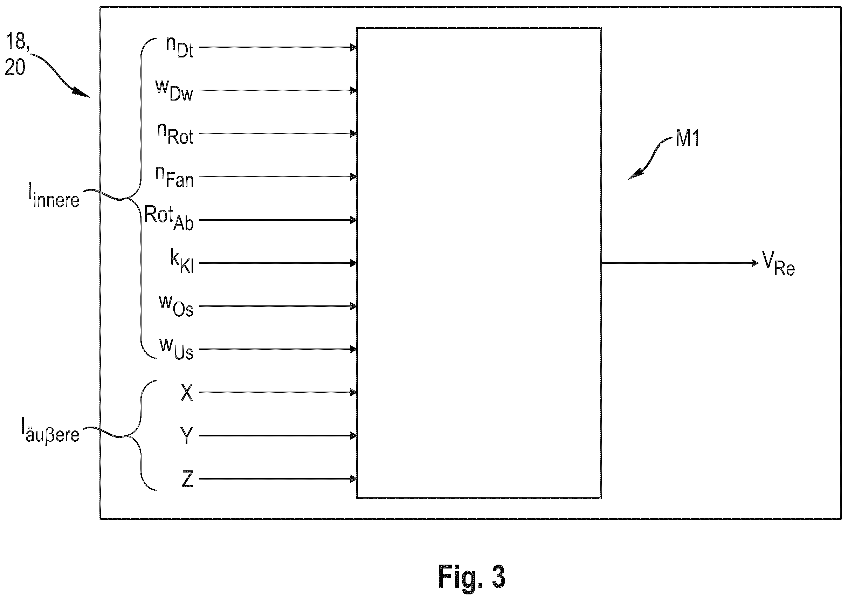

In Fig. 3 ist schematisch das Funktionsprinzip des Einstellautomaten 20 dargestellt. Der Einstellautomat 20 dient der gesamtheitlichen Ansteuerung der Arbeitsorgane 16 des Mähdreschers 1. Dabei bildet das Fahrerassistenzsystem 18 beispielsweise mit der Dreschvorrichtung 4, der Abscheidevorrichtung 5 und der Reinigungsvorrichtung 6 den Einstellautomaten 20.

Die gesamtheitliche Ansteuerung der Arbeitsorgane 16 kann erfolgen, indem mittels des Einstellautomaten 20 alle Einstellparameter bestimmt werden, mit denen die Arbeitsorgane 16 (d.h. die Dreschvorrichtung 4, die Abscheidevorrichtung 5 und die Reinigungsvorrichtung 6) eingestellt werden können.

Im Speicher 26 ist ein Gesamtmodell M1 pro Zielgröße hinterlegt. Das Gesamtmodell M1 bildet funktionale Zusammenhänge zwischen der Zielgröße und mehreren Einflussgrößen.

Das Gesamtmodell M1 des Einstellautomaten 20 weist als Einflussgröße innere Einflussgrößen $I_{innere}$ und äußere Einflussgrößen $I_{äußere}$ auf.

Die inneren Einflussgrößen $I_{innere}$ umfassen mehrere Arbeitsorganparameter. Die Arbeitsorganparameter sind eine Dreschtrommeldrehzahl $n_{Dt}$, eine Dreschkorbweite $w_{Dw}$, eine Rotordrehzahl $n_{Rot}$, eine Gebläsedrehzahl $n_{Fan}$, eine Stellung einer Rotorabdeckung $Rot_{Ab}$, eine Stellung einer Klappenöffnung $k_{Kl}$, eine Stellung eines Obersiebs $w_{Os}$ und eine Stellung eines Untersieb $w_{Us}$ auf.

Die äußeren Einflussgrößen $I_{äußere}$ umfassen mehrere Gutparameter. Die Gutparameter sind eine Bestandsdichte X, eine Dreschbarkeit Y und eine Bestandsfeuchte Z.

Das Gesamtmodell M1 des Einstellautomaten 20 weist als einzige Zielgröße einen Reinigungsverlust $V_{Re}$ auf. Auf Basis der Einflussgrößen und dem Gesamtmodell M1 kann die einzige Zielgröße berechnet werden. Der Fachmann weiß, dass der Einstellautomat 20 weitere Gesamtmodelle pro Zielgröße umfassen kann. Beispielsweise kann ein Gesamtmodell als Zielgröße einen Abscheideverlust $V_{Ab}$, ein Überkehrvolumen $Uek_{Vol}$ oder ein Kornanteilüberkehr $Uek_{Korn}$ aufweisen.

Das Gesamtmodell M1 kann in der einfachsten Form ein Regressionsmodell sein:

$$Y_i = f(X_i, \beta) + \varepsilon_i$$

Wobei $Y_i$ eine Funktion von $X_i$ und $\beta$ ist und wobei diese Beziehung von einer additiven Störgröße $\varepsilon_i$ überlagert wird, die für nicht modellierte oder unbekannte Bestimmungsfaktoren von $Y_i$ stehen kann.

In einem ersten Schritt kann der Einstellautomat 20 mittels eines computer-implementierten Verfahrens trainiert werden. Das Training des Einstellautomaten 20 findet dabei üblicherweise vor Inbetriebnahme des Mähdreschers 1 statt. Es ist auch möglich, dass der Einstellautomat 20 des Mähdreschers 1 während des Betriebs angepasst bzw. neu trainiert wird.

Zunächst können Trainingsdaten, umfassend Messwerte für die Einflussgrößen und die Zielgrößen, erfasst werden. Der Einstellautomat 20 kann mittels Minimierens einer Verlustfunktion trainiert werden. Die Verlustfunktion kann beispielsweise durch den Root Mean Square Error (RSME) gebildet sein:

$$\text{RMSE}(y, \hat{y}) = \sqrt{\frac{\sum_{i=0}^{N-1} (y_i - \hat{y}_i)^2}{N}}$$

Wobei N für die Gesamtzahl der Datenpunkte im Datensatz bzw. Trainingsdatensatz steht, $y_i$ den einen einzelnen Wert des i-ten Datenpunkt im Datensatz bezeichnet und $\hat{y}_i$ die Vorhersage ist, die das Gesamtmodell M1 für den i-ten Datenpunkt getroffen hat.

Demnach basiert die Verlustfunktion in Form des RMSE auf einer Zielgröße des Einstellautomaten 20 und den Trainingsdaten. Das Ergebnis des Trainings ist üblicherweise ein Set von geschätzten Koeffizienten $\hat{c}$ des Gesamtmodells M1, die in einfachster Form auch mittels

$$\hat{c} = (X^T X)^{-1} X^T y$$

bestimmt werden können.

In einem zweiten Schritt kann der Betriebspunkt eines Mähdreschers 1 mittels des Einstellautomaten 20 optimiert werden. Dazu kann ein computer-implementiertes Verfahren zum Einsatz kommen, bei dem Einstellparameter basierend auf dem trainierten Einstellautomaten 20 ermittelt werden.

Beispielsweise kann das trainierte Gesamtmodell M1 des Einstellautomaten 20 verwendet werden, um ein Minimum bzw. minimalen Wert für den Reinigungsverlust $V_{Re}$ zu berechnen. Die Berechnung ergibt dabei beispielsweise die Werte für die Einflussgrößen (d.h. Dreschtrommeldrehzahl $n_{Dt}$, Dreschkorbweite $w_{Dw}$, Rotordrehzahl $n_{Rot}$, Gebläsedrehzahl $n_{Fan}$, Stellung einer Rotorabdeckung $Rot_{Ab}$, Stellung einer Klappenöffnung $k_{Kl}$, Stellung eines Obersiebs $w_{Os}$, Stellung eines Untersieb $w_{Us}$, Bestandsdichte X, Dreschbarkeit Y und Bestandsfeuchte Z), bei denen der Reinigungsverlust $V_{Re}$ einen minimalen Wert annimmt. Das Ermitteln von Einstellparametern kann beispielsweise derart erfolgen, dass die Einflussgrößen des Einstellautomaten variiert werden. Dabei werden die Einflussgrößen so lange minimiert werden, bis die Zielgröße, d.h. der Reinigungsverlust $V_{Re}$, einen vorbestimmten Minimalwert annimmt. Die ermittelten Werte der Einflussgrößen können als Einstellparameter für die Arbeitsorgane 16 verwendet werden.

Das computer-implementierte Verfahren kann vorsehen, dass die Arbeitsorgane 16 des Mähdreschers 1 basierend auf den Einstellparameter angesteuert werden. Das heißt, die Einflussgrößen, bei denen ein Minimum bzw. ein minimaler Wert für den Reinigungsverlust $V_{Re}$ berechnet wurde, werden an die Dreschvorrichtung 4, die Abscheidevorrichtung 5 und die Reinigungsvorrichtung 6 übermittelt. Somit kann erreicht werden, dass ein Betriebspunkt des Mähdreschers 1 optimiert wird.

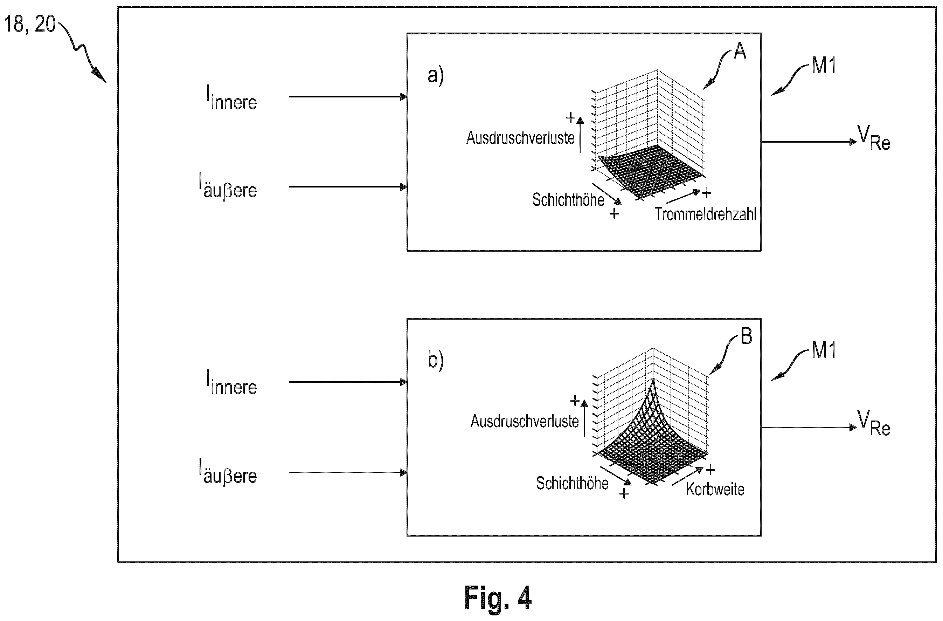

In Fig. 4 ist schematisch das Funktionsprinzip des Einstellautomaten 20 mit mehreren Gesamtmodellen M1, M2 dargestellt. Dabei umfasst der Einstellautomat 20 ein Gesamtmodell M1 für den Reinigungsverlust $V_{Re}$ und ein weiteres Gesamtmodell M2 für den Abscheideverlust $V_{Ab}$. Beide Gesamtmodelle M1, M2 haben innere Einflussgrößen $I_{innere}$ und äußere Einflussgrößen $I_{äußere}$.

Das Gesamtmodell M1 wird durch ein Kennlinienfeld A gebildet und das Gesamtmodell M2 wird durch ein Kennlinienfeld B gebildet. Dabei ist die Zielgröße mindestens einem Kennlinienfeld zur Abbildung der funktionalen Zusammenhänge zugeordnet. Die Zielgröße kann auf Basis einer Ausgangsgröße des mindestens einem Kennlinienfeld gebildet werden.

Zur zyklischen Adaption der Kennlinienfelder A, B können die von den Sensorsystemen 19 erfassten Daten verwendet werden.

Es ist möglich, dass mittels der beiden Gesamtmodelle M1, M2 eine Gesamtzielgröße G gebildet wird:

$$G(V_{Re}, V_{Ab}) = V_{Re} + V_{Ab}$$

Wird die Gesamtzielgröße G minimiert, können Einflussgrößen ermittelt werden, bei denen die beiden Verluste, Reinigungsverlust $V_{Re}$ und Abscheideverlust $V_{Ab}$, möglichst gering ausfallen. Die ermittelten Einflussgrößen können wiederum als Einstellparameter für die Arbeitsorgane 16 verwendet werden.

Es ist selbstverständlich möglich, dass der Einstellautomat 20 weitere Gesamtmodelle umfasst. Beispielsweise kann der Einstellautomat insgesamt 8 Gesamtmodelle aufweisen, die jeweilig zur Berechnung einer einzigen Zielgröße dienen.

**Bezugszeichenliste**

| | | | |
|---|---|---|---|
| 1 | Mähdrescher | 20 | Einstellautomat |
| 2 | Vorsatzgerät | 21 | Vorsatzgeräteautomat |
| 2a | Messerbalken | 21a | Haspelautomat |
| 2b | Haspel | 21b | Einzugsautomat |
| 2c | Einzugsschnecke | 22 | Dreschautomat |
| 3 | Schrägförderer | 23 | Trennautomat |
| 4 | Dreschvorrichtung | 24 | Reinigungsautomat |
| 4a | Dreschtrommel | 25 | Verteilautomat |
| 4b | Dreschkorb | 26 | Speicher |
| 5 | Trennvorrichtung | 26a | Ernteprozessstrategie |
| 6 | Reinigungsvorrichtung | 27 | Rechenvorrichtung |
| 6a | Gebläse | EG | Erntegutstrom |
| 6b | Obersieb | $n_{Dt}$ | Dreschtrommeldrehzahl |
| 6c | Untersieb | $w_{Dw}$ | Dreschkorbweite |
| 7 | Häcksel- und Verteilvorrichtung | $n_{Rot}$ | Rotordrehzahl |
| 7a | Spreufördereinrichtung | $n_{Fan}$ | Gebläsedrehzahl |
| 7b | Häckseleinrichtung | $Rot_{Ab}$ | Stellung einer Rotorabdeckung |
| 7c | Verteileinrichtung | $k_{Kl}$ | Stellung einer Klappenöffnung |
| 8 | Förderboden | $w_{Os}$ | Stellung eines Obersiebs |

(fortgesetzt)

| | | | |
|---|---|---|---|
| 9 | Rücklaufboden | $w_{Us}$ | und Stellung eines Untersieb |
| 10 | Fördervorrichtung | X | Bestandsdichte |
| 11 | Korntank | Y | Dreschbarkeit |
| 12 | Strohklappe | Z | Bestandsfeuchte |
| 13 | Fahrerkabine | | |
| 14 | Benutzerschnittstelle | $V_{Re}$ | Reinigungsverlust |
| 15 | Bussystem | $V_{Ab}$ | Abscheideverlust |
| 16 | Arbeitsorgan | $Uek_{Vol}$ | Überkehrvolumen |
| 17 | Erntegutbehandlungsmittel | $Uek_{Korn}$ | Kornanteilüberkehr |
| 18 | Fahrerassistenzsystem | M1, M2 | Gesamtmodell |
| 19 | Sensorsystem | G | Gesamtzielgröße |

**Patentansprüche**

1. Mähdrescher mit mehreren Arbeitsorganen (16) und einem Fahrerassistenzsystem (18) zur Ansteuerung der Arbeitsorgane, wobei das Fahrerassistenzsystem (18) einen Speicher (26) zum Hinterlegen von Daten und eine Rechenvorrichtung (27) zur Verarbeitung der in dem Speicher (26) hinterlegten Daten umfasst,

   **dadurch gekennzeichnet, dass** die Arbeitsorgane zusammen mit dem Fahrerassistenzsystem (18) einen Einstellautomaten (20) bilden, indem im Speicher (26) eine Mehrzahl auswählbarer Ernteprozeßstrategien (26a) hinterlegt sind und indem die Rechenvorrichtung (27) dazu eingerichtet ist, zur Umsetzung der jeweils ausgewählten Ernteprozeßstrategie (26a) mindestens einen Einstellparameter autonom zu ermitteln und den Arbeitsorganen gesamtheitlich vorzugeben,
   wobei im Speicher (26) ein Gesamtmodell (M1, M2) pro Zielgröße hinterlegt ist, wobei das Gesamtmodell (M1, M2) funktionale Zusammenhänge zwischen der Zielgröße und mehreren Einflussgrößen bildet, wobei die Einflussgrößen innere Einflussgrößen ($I_{innere}$) und äußere Einflussgrößen ($I_{äußere}$) umfassen,
   und wobei die Rechenvorrichtung (27) dazu eingerichtet ist, die autonome Ermittlung des mindestens einen Einstellparameters basierend auf dem Gesamtmodell (M1, M2) vorzunehmen.

2. Mähdrescher (1) nach Anspruch 1, wobei die auswählbaren Ernteprozeßstrategien (26a) jeweils auf die Zielvorgabe der Einstellung oder der Optimierung einer Zielgröße wie "Ausdruschverluste", "Bruchkornanteil", "Abscheideve-luste", "Reinigungsverluste", "Schlupf-Dreschwerk-Antrieb", "Kraftstoffverbrauch" durch eine entsprechende Vorgabe von Einflussgrößen gerichtet sind.

3. Mähdrescher (1) nach Anspruch 1 oder 2, wobei die Zielgröße mindestens einem Kennlinienfeld (A, B) zur Abbildung der funktionalen Zusammenhänge zugeordnet ist, wobei die Zielgröße auf Basis einer Ausgangsgröße des mindestens einem Kennlinienfeld (A, B) gebildet wird.

4. Mähdrescher (1) nach einem der vorherigen Ansprüche,
   wobei die inneren Einflussgrößen ($I_{innere}$) einen Arbeitsorganparameter umfassen und wobei der Arbeitsorganparameter als zumindest einer der folgenden ausgebildet ist:

   eine Dreschtrommeldrehzahl ($n_{Dt}$);
   eine Dreschkorbweite ($w_{Dw}$);
   eine Rotordrehzahl ($n_{Rot}$);
   eine Gebläsedrehzahl ($n_{Fan}$);
   eine Stellung einer Rotorabdeckung ($Rot_{Ab}$);
   eine Stellung einer Klappenöffnung ($k_{Kl}$);
   eine Stellung eines Obersiebs ($w_{Os}$) und/oder
   eine Stellung eines Untersiebs ($w_{Us}$).

5. Mähdrescher (1) nach einem der vorherigen Ansprüche,
   wobei die äußeren Einflussgrößen ($I_{äußere}$) einen Gutparameter umfassen und wobei der Gutparameter als zumindest einer der folgenden ausgebildet ist:

eine Bestandsdichte,
eine Dreschbarkeit und/oder
eine Bestandsfeuchte.

6. Mähdrescher (1) nach einem der vorherigen Ansprüche,
wobei das Gesamtmodell (M1, M2) auf einem regularisierten Modell basiert.

7. Mähdrescher (1) nach einem der vorherigen Ansprüche,
wobei der Mähdrescher (1) ein Aktuatorsystem umfasst und das Aktuatorsystem eine Vielzahl von Aktuatoren aufweist, wobei die Vielzahl der Aktuatoren mit dem Einstellautomaten (20) in Verbindung stehen und wobei mittels jeweils eines Aktuators eines der Arbeitsorgane (16) ansteuerbar ist.

8. Mähdrescher nach einem der vorhergehenden Ansprüche, wobei die Rechenvorrichtung (27) das Gesamtmodell (M1, M2) im laufenden Erntebetrieb zyklisch auf einen aktuellen Ernteprozesszustand abgleicht und wobei eine Sensoranordnung (19) zur Erfassung zumindest eines Teils des Ernteprozesszustands vorgesehen ist.

9. Mähdrescher (1) nach Anspruch 8,
wobei die Sensoranordnung (19) einen Abscheideverlustsensor, einen Reinigungsverlustsensor, einen Bruchkornsensor und/oder einen Ausdruschverlustsensor umfasst.

10. Mähdrescher (1) nach einem der vorhergehenden Ansprüche,
wobei als Arbeitsorgane (16) eine Dreschvorrichtung (4), eine Abscheidevorrichtung (5) und eine Reinigungsvorrichtung (6) vorgesehen sind und/oder wobei das Fahrerassistenzsystem (18) mit einer Dreschvorrichtung (4), einer Abscheidevorrichtung (5) und einer Reinigungsvorrichtung (6) einen Einstellautomaten (20) bildet.

**Fig. 1**

EP 4 686 393 A1

**Fig. 2**

Fig. 3

Fig. 4

Europäisches
Patentamt

European
Patent Office

Office européen
des brevets

# EUROPÄISCHER RECHERCHENBERICHT

**Nummer der Anmeldung**

EP 25 18 3682

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 566 563 A1 (CLAAS SELBSTFAHRENDE ERNTEMASCHINEN GMBH [DE]) 13. November 2019 (2019-11-13) * Absätze [0016], [0029] - [0037] * ----- | 1-10 | INV. A01D41/127 |
| X | EP 2 401 905 A2 (CLAAS SELBSTFAHR ERNTEMASCH [DE]) 4. Januar 2012 (2012-01-04) * Absätze [0027], [0036] - [0039] * ----- | 1-10 | |
| X,D | DE 101 47 733 A1 (CLAAS SELBSTFAHR ERNTEMASCH [DE]) 10. April 2003 (2003-04-10) * Absätze [0019] - [0025] * ----- | 4,9 | |

**RECHERCHIERTE SACHGEBIETE (IPC)**

A01D

Der vorliegende Recherchenbericht wurde für alle Patentansprüche erstellt

| Recherchenort | Abschlußdatum der Recherche | Prüfer |
|---|---|---|
| München | 19. November 2025 | Karstens, Thede |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 18 3682

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-11-2025

| Im Recherchenbericht angeführtes Patentdokument | Datum der Veröffentlichung | Mitglied(er) der Patentfamilie | Datum der Veröffentlichung |
|---|---|---|---|
| EP 3566563 A1 | 13-11-2019 | DE 102018111076 A1 | 14-11-2019 |
| | | EP 3566563 A1 | 13-11-2019 |
| | | US 2019343044 A1 | 14-11-2019 |
| EP 2401905 A2 | 04-01-2012 | AR 081781 A1 | 17-10-2012 |
| | | BR PI1102972 A2 | 20-11-2012 |
| | | DE 102010017687 A1 | 05-01-2012 |
| | | EP 2401905 A2 | 04-01-2012 |
| | | RU 2011126084 A | 10-01-2013 |
| | | UA 110090 C2 | 25-11-2015 |
| | | US 2012004813 A1 | 05-01-2012 |
| DE 10147733 A1 | 10-04-2003 | AT E385673 T1 | 15-03-2008 |
| | | DE 10147733 A1 | 10-04-2003 |
| | | DK 1297733 T3 | 09-06-2008 |
| | | EP 1297733 A1 | 02-04-2003 |
| | | US 2003066277 A1 | 10-04-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3566563 A1
- DE 10147733 A1